# EUROPÄISCHE PATENTSCHRIFT

(11) **EP 3 046 691 B1**
(45) Veröffentlichungstag und Bekanntmachung des Hinweises auf die Patenterteilung: **16.05.2018**
(21) Anmeldenummer: 14766489.0
(22) Anmeldetag: 17.09.2014
(51) Int. Cl.: B21B 35/14, F16D 1/06

(54) **WELLE-NABE-VERBINDUNG, INSBESONDERE WALZENZAPFEN-TREFFER-VERBINDUNG FÜR DEN EINSATZ IN WALZWERKEN**
SHAFT-HUB CONNECTION, IN PARTICULAR CONNECTION BETWEEN A ROLL NECK AND A WOBBLER FOR USE IN ROLLING MILLS
LIAISON ARBRE-MOYEU, EN PARTICULIER LIAISON TOURILLON DE CYLINDRE-TRÈFLE, DESTINÉE À ÊTRE RÉALISÉE DANS DES LAMINOIRS

(30) Priorität: 19.09.2013 DE 102013218792
(43) Veröffentlichungstag der Anmeldung: 27.07.2016
(73) Patentinhaber: Voith Patent GmbH, 89522 Heidenheim (DE)
(72) Erfinder: GRAWENHOF, Peter, 89547 Dettingen (DE); MAIER, Dieter, 89537 Giengen (DE); STOCKER, Jürgen, 73466 Lauchheim (DE)
(86) Internationale Anmeldenummer: PCT/EP2014/069753
(87) Internationale Veröffentlichungsnummer: WO 2015/040040

(56) Entgegenhaltungen:
- DE-A1- 2 145 707
- DE-A1- 2 950 056
- DE-A1- 19 710 552
- DE-U- 1 921 517

## Beschreibung

Die Erfindung bezieht sich auf eine Welle-Nabe-Verbindung, insbesondere Walzenzapfen-Trefferverbindung für den Einsatz in Walzwerken, wobei eine um eine in Längsrichtung verlaufende Rotationsachse rotierbare Welle mit einem koaxial an diesem angeordneten Walzenzapfen ausgeführt ist, der in eine Öffnung an der Nabe zumindest teilweise einführbar ist, wobei die Nabe ein Aufnahmeelement umfasst und der Walzenzapfen und das Aufnahmeelement formschlüssig und/oder kraftschlüssig direkt oder über eine zwischengeordnete Verschleißeinrichtung wenigstens mittelbar miteinander verbunden sind.

Eine Walzenstrecke besteht aus einer Mehrzahl von Arbeitswalzen. Um die Arbeitswalze in Rotation zu versetzen, ist ein Antrieb vorgesehen, der das von dem Antrieb bereit gestellte Drehmoment wenigstens mittelbar über eine Welle-Nabe-Verbindung auf die Arbeitswalze überträgt. Im Allgemeinen ist zwischen dem Antrieb und dem Walzenzapfen eine Gelenkwelle vorgesehen, welche über einen sogenannten Treffer mit der Arbeitswalze gekoppelt ist. Die Arbeitswalze selbst weist koaxial angeordnet einen Walzenzapfen auf, der form- und/oder kraftschlüssig mit einer Nabe in Form eines Treffers verbunden ist.

Drehfeste, formschlüssige schnell lösbare Verbindungen zwischen antreibenden und angetriebenen Bauteilen, insbesondere zwischen einem Walzenzapfen einer Arbeitswalze und dem auf diesen aufgesetzten Treffer für den Einsatz in Walzwerken sind in einer Vielzahl von Ausführungen aus dem Stand der Technik bekannt. Unter einem Treffer wird dabei eine Verbindungseinheit zwischen einer Gelenkwelle und einem Walzenzapfen verstanden, wobei diesem weitere Funktionen zuordenbar sind. Stellvertretend wird hier beispielhaft auf Ausführungen aus den Druckschriften DE 950 782, DE 197 10 554 A1 und DE 197 10 552 A1 verwiesen. Bei diesen Ausführungen erfolgt die Übertragung eines anstehenden Drehmomentes durch Formschluss zwischen Mitnahmeflächen am Walzenzapfen und dem jeweiligen Anschlusselement in Form eines Treffers. Die Arbeitswalze ist wenigstens mittelbar mit einer Antriebsmaschine über eine Gelenkwelle gekoppelt. Da in Walzwerken die Walzen regelmäßig nachgeschliffen werden müssen, ist zwischen der jeweiligen Arbeitswalze und der Gelenkwelle eine Anschlusstechnik erforderlich, die zum einen ein schnelles Verbinden und Lösen ermöglicht und ferner möglichst verschleißfrei ist. Bei herkömmlichen derartigen Verbindungen sieht eine übliche Ausbildung nach dem Stand der Technik vor, die Nabe und einen zuordenbaren Walzenzapfen als Teil einer formschlüssigen Kupplung mit ineinandergreifenden Kupplungspassflächen sowie mit zusätzlich einlegbaren Verschleißplatten auszubilden. Die Drehmomentübertragung erfolgt über den mit der Nabe formschlüssig verbundenen Flachzapfen. Das vorhandene Spiel ist zwar für die Montage vorteilhaft, bedingt jedoch andererseits Relativbewegungen im Walzbetrieb und dadurch einen relativ rapiden Verschleiß der Verschleißplatten sowie sprunghafte Belastungsspitzen am Antriebsaggregat, die auch die Qualität des Walzgutes stark beeinträchtigen können.

Um ein problemloses Ein- und Ausfahren des Walzenzapfens, der vorzugsweise oder in vielen Ausführungsformen als Flachzapfen ausgebildet ist, zu gewährleisten, ist zwischen dem Flachzapfen und der Nabe, insbesondere dem Anschlussbauteil in Form eines Treffers ein Spiel vorgesehen. Es besteht jedoch für den Betrieb die Forderung, das Spiel möglichst gering zu halten, um Verschleiß und dynamische Effekte zu minimieren. Demzufolge wird in der Praxis das Spiel so gering wie möglich gewählt, sodass ein Ein- und Ausfahren des Walzenzapfens aus bzw. in das Aufnahmeelement gerade noch möglich ist. Erfahrungsgemäß entstehen jedoch die Probleme darin, dass ein Klemmen des Walzenzapfens innerhalb des Aufnahmeelementes eintritt, sofern nicht eine sehr genaue axiale Einführung erfolgt. Ferner wird ein entsprechender Materialabtrag beobachtet, der bereits beim Fügen bzw. Lösen der Verbindung auftritt, insbesondere dann, wenn das zuvor beschriebene Spiel nicht ausreichend groß dimensioniert ist. Die sensible Füge-/Lösestrecke über den Verbindungsbereich betrachtet erstreckt sich dabei in der Regel über den gesamten Verbindungsbereich.

Aus der DE 21 45 707 A1 ist eine Naben-Wellenanordnung bekannt, mit einer abgestuften Naben-Wellenausführung. Bei dieser Naben-Wellenausführung ist die Nabe auf der Welle mittels einer Passung mit Spiel zwischen den Stufen der Nabe und der Welle befestigt. Für ein Abziehen bzw. Lösen wird die Nabe mittels Druckflüssigkeit aufgeweitet. Bei dieser Wellen-Nabenverbindung ist die Welle stufig und rotationssymmetrisch ausgebildet und es handelt sich bei der Verbindung um eine kraftschlüssige und spielfreie Verbindung andernfalls wäre eine Aufweitung zum Lösen der Verbindung nicht erforderlich. Sobald der Kraftschluss gelöst ist kann die Nabe von der Welle gelöst.

Aus der DE 1 921 517 ist eine leicht lösbare Kupplung für Walzwerke mit einem Flachzapfen bekannt. Bei dieser Kupplung sind Gelenksteine vorgesehen, die selbsttätig auf die anliegende Fläche des anderen Kupplungsteiles einschwenken. Dadurch wird die Antriebskraft in ihrer Gesamtheit flächig mittels der Gelenksteine übertragen.

Aus der DE 29 50 056 A1 ist eine Gelenkverbindung mit einem Zentrier- und Kupplungszapfen und einer zugeordneten Kupplungsmuffe bekannt. Eine Ausrichtung der Zentrier- und Kupplungszapfen der Walzen und der Muffen der Gelenkwelle ist beim Einbau durch einen Hilfsantrieb unabhängig von der übrigen Einbaumethode möglich.

Der Erfindung lag daher die Aufgabe zugrunde, die zuvor beschriebene Verbindung zwischen dem Walzenzapfen und einer Nabe in Form eines Aufnahmeelementes derart weiter zu bilden, dass die Sicherheit des Füge- und Löseprozesses erhöht und der Verschleiß minimiert werden, wobei die Verbindung während des Betriebes durch ein möglichst geringes oder kein Spiel charakterisiert ist.

Die erfindungsgemäße Lösung ist durch die Merkmale von Anspruch 1 charakterisiert. Vorteilhafte Ausgestaltungen sind in den Unteransprüchen beschrieben.

Eine erfindungsgemäße Welle-Nabe-Verbindung, insbesondere Walzenzapfen-Trefferverbindung für den Einsatz in Walzwerken, wobei eine um eine in Längsrichtung verlaufende Rotationsachse rotierbare Welle mit einem koaxial an diesem angeordneten Walzenzapfen ausgeführt ist, der in eine Öffnung an der Nabe zumindest teilweise einführbar ist, wobei die Nabe ein Aufnahmeelement umfasst und der Walzenzapfen und das Aufnahmeelement formschlüssig und/oder kraftschlüssig direkt oder über eine zwischengeordnete Verschleißeinrichtung wenigstens mittelbar miteinander verbunden sind, ist dadurch charakterisiert, dass der Walzenzapfen abgestuft unter Ausbildung von Zapfenteilbereichen unterschiedlicher Abmessungen derart ausgebildet ist, dass sich dieser zu seinem freien Ende hin verjüngt und dass die den Walzenzapfen aufnehmende Öffnung der Nabe vom Aufnahmeelement oder einer zwischen Aufnahmeelement und dem Walzenzapfen angeordneten Verschleißeinrichtung gebildet ist und zum Walzenzapfen kommunizierend abgestuft ist.

Der Grundgedanke der Erfindung besteht darin, dass der Walzenzapfen in seiner axialen Erstreckung zu seinem freien Ende hin abgestuft ist und sich in seinen Abmessungen, insbesondere Dicke zum freien Ende hin reduziert. Zumindest ist vorgesehen, dass eine Abstufung vorhanden ist und dass die den Zapfen aufnehmende Öffnung an diese Kontur kommunizierend angepasst ist. Dadurch entstehen Kontaktflächen zwischen der jeweiligen Oberfläche am die Öffnung bildenen Element - Aufnahmeelement oder Verschleißeinrichtung - und der Oberfläche bzw. einem Teil des Umfangs des Walzenzapfens, die bei der Montage oder Demontage jedoch nicht über den gesamten Verbindungsbereich miteinander in Wirkverbindung stehen sondern erst ab einem bestimmten Bereich. Die die durch ein geringes Spiel charakterisierte sensible Fügestrecke/Lösestrecke wird somit erheblich reduziert, da der Walzenzapfen beim Einfahren- oder Lösen nicht über die gesamte Erstreckung der Öffnung in Axialrichtung mit geringem Spiel gegenüber der Öffnung bewegt werden muss.

In einer besonders vorteilhaften Ausbildung ist vorgesehen, dass die Verschleißeinrichtung zumindest ein sich über wenigstens einen Zapfenteilbereich des Verbindungsbereiches erstreckendes und zwischen Walzenzapfen und Aufnahmeelement angeordnetes Verschleißelement umfasst, welches flächig am Innenumfang der Öffnung des Aufnahmeelementes anliegend ausgeführt ist. Die zum Walzenzapfen weisende Seite des Verschleißelementes ist mit dem Walzenzapfen kommunizierend abgestuft. Dadurch entstehen Kontaktflächen zwischen der jeweiligen Verschleißplatte und der Oberfläche bzw. einem Teil des Umfangs des Walzenzapfens, die bei der Montage oder Demontage jedoch nicht über den gesamten Verbindungsbereich miteinander in Wirkverbindung stehen sondern erst ab einem bestimmten Bereich. Das Aufnahmeelement kann gegenüber Ausführungen aus dem Stand der Technik unverändert ausgeführt bleiben, wobei das einzelne Verschleißelement flächig am Walzenzapfen und dem Innenumfang am Aufnahmeelement zum Anliegen gelangen kann, jedoch die durch ein sehr geringes Spiel charakterisierte sensible Füge-/Lösestrecke reduziert ist.

Während des Einführvorgangs ist - im Vergleich zur Öffnung des Aufnahmeelementes - dadurch eine kleine Weite des Walzenzapfens vorhanden, so dass ein einfaches Einführen aufgrund des sehr großen Spiels möglich ist. Das Aufnahmeelement kann nun weiter über den Walzenzapfen geschoben werden, bis sich die abgestuften Verschleißelemente an die äußere Wandung des stufenartig ausgebildeten Walzenzapfes anlegen. Somit ist ein einfaches Einführen und Lösen möglich, da für diese Vorgänge ausreichend Spiel vorhanden ist, wohingegen im Betrieb ein geringes oder kein Spiel zwischen den Kontaktflächen vom Walzenzapfen und dem Aufnahmeelement bzw. den Verschleißelementen gegeben ist.

Um entsprechendem Verschleiß entgegen zu treten, ist vorgesehen, dass innerhalb des Erstreckungsbereiches zumindest ein Verschleißelement angeordnet ist, welches an seiner zum Walzenzapfen weisenden Oberfläche der äußeren Kontur des Walzenzapfens angepasst ist. Denkbar ist es jedoch auch, mehrere in Längsrichtung des Walzenzapfens einander benachbart angeordnete derartige Verschleißelemente vorzusehen.

Das einzelne Verschleißelement ist kraft- und/oder formschlüssig im Aufnahmeelement fixiert. Dadurch ist eine genaue Lagezuordnung auch während des Betriebes gegeben.

In einer Weiterentwicklung sind am Walzenzapfen vorzugsweise wenigstens zwei Abstufungen, beispielsweise 2 bis 20 oder mehr Abstufungen vorgesehen.

Vorzugsweise sind die einzelnen Teilbereiche hinsichtlich ihrer Erstreckung in Längsrichtung des Walzenzapfens unterschiedlich ausgeführt, wobei der Teilbereich, welcher vom freien Walzenzapfenende erstreckend ausgeführt ist, eine größere Erstreckung in Längsrichtung des Walzenzapfens aufweist, als die übrigen Teilbereiche. Dadurch wird gewährleistet, dass die kritische Löse- und Fügestrecke beim Einführen des Zapfens möglichst gering gehalten wird, da der beim Einführen des Zapfens spielbehaftete Teil innerhalb des Aufnahmeelementes vergrößert ausgeführt ist.

Diese Lösung ist sowohl für Ausführungen mit zylindrischem Walzenzapfen als auch Keil- oder Flachzapfen geeignet. In besonders vorteilhafter Weise erfolgt der Einsatz zur Realisierung der Verbindung zwischen planen Flachzapfenseiten und Aufnahmeelement, insbesondere Treffer.

Der Einsatz derartiger Verbindungen erfolgt in besonders vorteilhafter Weise in einer Antriebsanordnung für ein Walzwerk zum Antrieb zumindest einer Arbeitswalze, welche über eine Gelenkwelle mit einer Antriebsmaschine gekoppelt ist. Zwischen Gelenkwelle und Arbeitswalze ist eine Verbindungseinrichtung in Form eines Treffers vorgesehen, wobei die drehfeste Verbindung zwischen dem Treffer und der Arbeitswalze als Welle-Nabe-Verbindung gemäß einem der Ansprüche 1 bis 10 ausgeführt ist.

Weitere vorteilhafte Ausgestaltungen gehen aus der nachfolgenden Beschreibung, den Zeichnungen sowie den Ansprüchen hervor.

Es zeigen:
- Figur 1: zeigt beispielhaft einen Antriebsstrang für ein Walzwerk mit einer vorteilhaften erfindungsgemäß ausgeführten Welle-Nabe-Verbindung;
- Figuren 2a und 2b: zeigen Darstellungen der einzelnen Bauteile - Walzenzapfen und Aufnahmeelement;
- Figur 3: eine schematische Darstellung der erfindungsgemäßen Ausführungsform der Welle-Nabe-Verbindung mit dem jeweils abgesetzten Walzenzapfen bzw. Verschleißelement;
- Figur 4: zeigt beispielhaft eine Ausbildung einer Welle-Nabe-Verbindung mit abgesetzten Walzenzapfen und abgestufter Öffnung am Aufnahmeelement frei von einer Verschleißeinrichtung;
- Figur 5: zeigt beispielhaft eine Ausbildung einer Welle-Nabe-Verbindung mit abgesetzten Walzenzapfen und abgestufter Öffnung am Aufnahmeelement mit einer Verschleißeinrichtung.

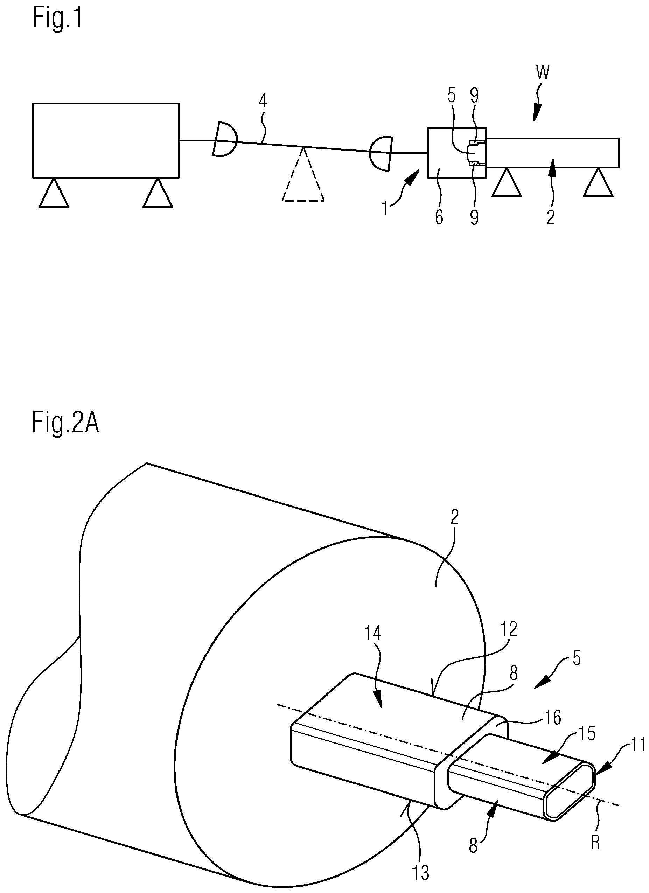

Die Figur 1 verdeutlicht in schematisiert vereinfachter Darstellung den Aufbau eines Antriebsstranges zum Antrieb zumindest einer Walze 2, welche in Form einer Arbeitswalze in besonders vorteilhafter Anwendung in einem Walzwerk W zum Einsatz gelangt. Der Antriebsstrang umfasst zumindest eine Antriebsmaschine 3, welche zum Ausgleich von Lageungenauigkeiten über eine Gelenkwelle 4 in Form einer sogenannten Schwergelenkwelle wenigstens mittelbar mit der Walze 2 verbunden ist. Die Verbindung erfolgt über eine erfindungsgemäß ausgeführte Welle-Nabe-Verbindung 1. Die Nabe 18 kann am Gelenkwellenflansch selbst ausgebildet sein oder von einem separaten, mit der Gelenkwelle 4 drehfest gekoppelten, insbesondere verbundenen Bauteil, welches als Nabe fungiert und beim Einsatz in Walzwerken auch als Treffer bezeichnet wird, gebildet werden. Die Welle-Nabe-Verbindung 1 ist zwischen einer Nabe 18 und einem Walzenzapfen 5 der Arbeitswalze 2 als formschlüssige und/oder kraftschlüssige Verbindung ausgeführt. Der Walzenzapfen 5 wird dazu in eine sich in Längsrichtung erstreckende Öffnung 10 der Nabe 18 eingeführt. Die Nabe 18 umfasst zumindest ein Aufnahmeelement 6.

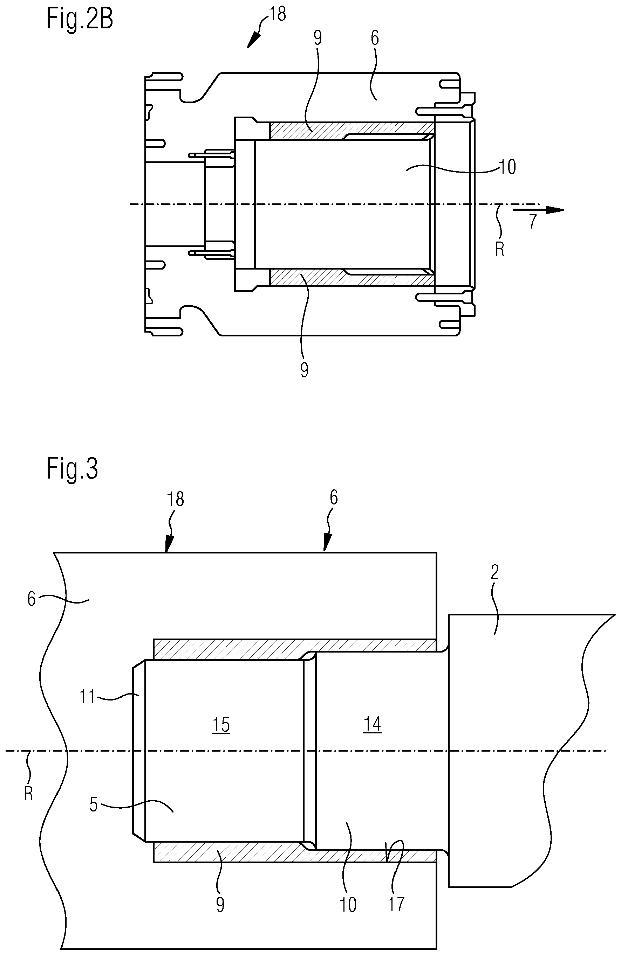

Bei den in den Figuren 2a, 2b dargestellten zu verbindenden Bauteilen und der in Figur 3 dargestellten Welle-Nabe-Verbindung 1 handelt es sich um eine besonders vorteilhafte Ausgestaltung. Diese Welle-Nabe-Verbindung 1 ist zwischen einem Aufnahmeelement 6 und einem Walzenzapfen 5 der Arbeitswalze 2 ausgebildet, wobei zwischen Aufnahmeelement 6 und Walzenzapfen 5 über zumindest einen Teilbereich des Fügebereiches eine Verschleißeinrichtung als Opferbauteil angeordnet ist. Die Verschleißeinrichtung umfasst zumindest ein Verschleißelement 9. Die miteinander zu verbindenden Bauteile sind in den Figuren 2a und 2b wiedergegeben, die Verbindung im Axialschnitt in Figur 3.

Die Figur 2a zeigt einen Ausschnitt aus dem Endbereich einer Walze 2, insbesondere den Walzenzapfen 5, welcher in besonders vorteilhafter Weise in Form eines Flachzapfens vorliegt. Der Flachzapfen ist koaxial zur Rotationsachse R angeordnet und durch zwei zueinander parallel angeordnete und einander gegenüberliegende Flachzapfenseiten 12, 13 charakterisiert, welche über gerundet ausgeführte Übergangsbereiche miteinander verbunden sind und den Außenumfang des Flachzapfens bilden. Die Flachzapfenseiten 12, 13 beschreiben ebene Flächenbereiche 8, die diametral gegenüberliegend angeordnet sind.

Eine Ausführungsform sieht vor, dass der Walzenzapfen 5, wie in Figur 2a dargestellt, abgestuft ausgebildet ist. Die Abstufung erfolgt zu seinem freien Ende 11 hin abnehmend. Dies bedeutet, dass zumindest die Dicke bzw. der Durchmesser des Walzenzapfens 5 zu seinem freien Ende 11 hin geringer wird. Dabei kann sich beispielsweise die Dicke des an den Flachseiten 12, 13 vorgesehenen planen Bereichs des Walzenzapfens 5 reduzieren. Vorzugsweise ist, eine Stufe 16 unter Ausbildung zweier Teilbereiche 14 und 15 vorgesehen.

Figur 2b zeigt in einem Axialschnitt eine Nabe 18 in Form des Treffers. Das Aufnahmeelement 6 weist eine Öffnung 17 auf, in welche der Walzenzapfen 5 eingeschoben wird beziehungsweise mittels der das Aufnahmeelement 6 auf den Walzenzapfen 5 aufgeschoben wird. Im Aufnahmeelement 6 angeordnet und form- und/oder kraftschlüssig an diesem fixiert, ist zumindest ein Verschleißelement 9 einer Verschleißeinrichtung, welches bei vorliegender Verbindung als Opferbauteil zwischen dem Außenumfang des Walzenzapfens 5 und dem Innenumfang des Aufnahmeelementes 6 fungiert. Das Verschleißelement 9 liegt dabei an seiner zum Aufnahmeelement 6 weisenden Seite zumindest teilweise flächig am Innenumfang der Öffnung 17 an und ist an seiner zum Walzenzapfen 5 weisenden Seite kommunizierend zu dessen Oberfläche gestuft ausgeführt. Die den Walzenzapfen 5 direkt aufnehmende Öffnung 10 wird dabei von den zum Walzenzapfen 5 gerichteten Flächenbereichen der Verschleißeinrichtung gebildet.

Das Aufnahmeelement 6 wird in Pfeilrichtung 7 betrachtet auf den Walzenzapfen 5 aufgeschoben und passiert somit zuerst den Teilbereich 15 und dann den Teilbereich 14, so dass Teilbereich 15 mit sehr großem Spiel passiert wird und erst mit Erreichen des Teilbereiches 14 die sensible Fügestrecke beginnt. Das Verschleißelement 9 ist somit derart ausgeführt, dass beim Aufstecken des Aufnahmeelements 6 auf den Walzenzapfen 5 zunächst eine sehr große Öffnung 10 an der Nabe 18 zur Verfügung steht, sodass ein problemloses Einführen des Walzenzapfens 5 möglich ist. Grund hierfür ist, dass das freie Ende 11 des Walzenzapfens 5 in Bezug auf die Öffnung klein ist, so dass ein großes Spiel und damit ein problemloses Konnektieren möglich sind. Bei Weiterführung in Pfeilrichtung 7 erfährt das freie Ende 11 des Walzenzapfens 5 nahezu selbsttätig eine automatische Zentrierung, in der Art, dass das freie Ende des Walzenzapfens 5 in den engeren Bereich an der Nabe gelangt. Die übrigen abgestuften Bereiche kommen zumindest mit Spiel innerhalb der Nabe zur Anlage. Die überwiegenden Kontaktflächen finden daher im Bereich entfernt vom stirnseitigen Ende der Öffnung 10 an der Nabe 18 und damit dem zur Walze gerichteten Stirnseite der Nabe 18 statt, so dass die Kontaktflächen insbesondere für das Lösen reduziert sind. Dies bedeutet, dass die Kontaktflächen in den Bereichen liegen, die gering belastet sind. Dadurch ist ein einfaches Lösen bzw. Fügen möglich.

Die Ausführung gemäß der Figuren 2b und 3 ist dadurch charakterisiert, dass der Innenumfang der Öffnung 17 am Aufnahmeelement frei von einer Abstufung ist. Diese wurde in die Verschleißeinrichtung, insbesondere das Verschleißelement 9 verlegt.

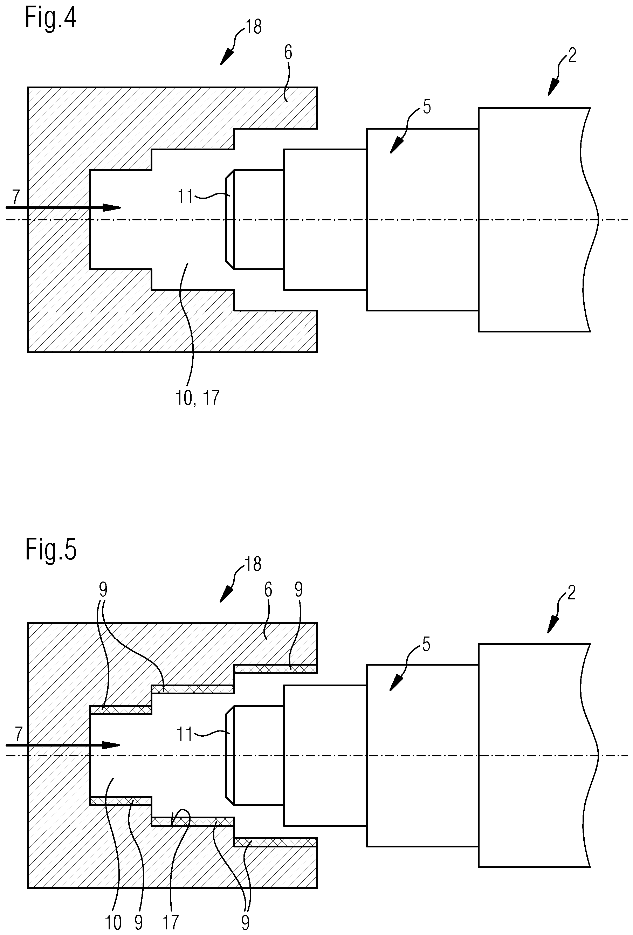

Figur 4 zeigt demgegenüber eine Ausführung frei von einer Verschleißeinrichtung. Dargestellt sind der Walzenzapfen 5 und die Nabe 18 im noch ungefügten Zustand. Die Fügerichtung ist mittels Pfeil 7 verdeutlicht. Der Walzenzapfen 5 ist beispielhaft wie in Figur 2a dargestellt ausgeführt, lediglich mit erhöhter Anzahl an Stufungen.

Die Verbindung ist dadurch charakterisiert, dass der Walzenzapfen 5 direkt mit dem Aufnahmeelement 6 kommunizierend ausgeführt ist. Die den Walzenzapfen 5 aufnehmende Öffnung 10 an der Nabe 18 wird von der Öffnung 17 am Aufnahmeelement 6 gebildet.

Eine vorteilhafte Weiterbildung der Ausführung gemäß Figur 4 sieht gemäß Figur 5 vor, dass innerhalb des Aufnahmeelements 6 zumindest in den Bereichen, in denen die Kontaktflächen vorliegen, Verschleißelemente 9 angeordnet sind. Diese sind bei Ausbildung des Walzenzapfens 5 als Flachzapfen als "Opfer-Platten" ausgelegt, so dass diese bei entsprechendem Verschleiß einfach ausgewechselt werden können. Bei Flachzapfenausführungen sind Verschleißelemente 9 dazu an beiden Flachzapfenseiten 12, 13 wirksam.

Das einzelne Verschleißelement 9, insbesondere die einzelne Verschleißplatte kann ein- oder mehrteilig ausgeführt sein. Die Unterteilung kann mit der Zuordnung zu den einzelnen Teilbereichen korrelieren.

Vorzugsweise ist bei allen Ausführungen zumindest eine Stufe 16 vorgesehen, die den Walzenzapfen 5 in zwei Teilbereiche 14, 15 unterteilt. Die Ausführungen der Figuren 4 und 5 sind durch wenigstens zwei Abstufungen charakterisiert. Die Kontaktfläche wird dadurch im Übergangsbereich zwischen den Teilbereichen nur etwas verkleinert, wobei diese in einem Bereich geringerer Belastung stattfindet. Diese sensible Füge- bzw. Lösestrecke reduziert sich jedoch erheblich.

Eine höhere Anzahl von Abstufungen führt dazu, dass der Walzenzapfen 5 bzw. der Innenraum des Aufnahmeelementes 6 oder der Verschleißeinrichtung keilförmig ausgebildet ist.

Die erfindungsgemäße Lösung ist auch, hier jedoch nicht wiedergegeben, für zylindrische Walzenzapfenausbildungen geeignet. In diesem Fall wäre das Verschleißelement als Hülse oder Hülsensegment mit abgestufter Innenkontur ausgebildet.

Das Aufnahmeelement kann vormontiert mit der in der Öffnung fixierten Verschleißeinrichtung als selbstständige Baueinheit gehandhabt werden.

### Bezugszeichenliste

- 1: Welle-Nabe-Verbindung
- 2: Arbeitswalze
- 3: Antrieb
- 4: Gelenkwelle
- 5: Walzenzapfen
- 6: Aufnahmeelement
- 7: Pfeilrichtung
- 8: planer Bereich
- 9: Verschleißelement
- 10: Öffnung an Nabe
- 11: freies Ende des Walzenzapfens 5
- 12: Flachzapfenseite
- 13: Flachzapfenseite
- 14: Zapfenteilbereich
- 15: Zapfenteilbereich
- 16: Stufe
- 17: Öffnung
- 18: Nabe
- W: Walzwerk
- R: Rotationsachse

## Patentansprüche

1. Welle-Nabe-Verbindung, insbesondere Walzenzapfen-Trefferverbindung für den Einsatz in Walzwerken, wobei eine um eine in Längsrichtung verlaufende Rotationsachse rotierbare Welle mit einem koaxial an diesem angeordneten Walzenzapfen (5) ausgeführt ist, der in eine Öffnung (10) an einer Nabe (18) der Wellen Naben-Verbindung Zumindest teilweise einführbar ist, wobei die Nabe (18) ein Aufnahmeelement (6) umfasst und der Walzenzapfen (5) und das Aufnahmeelement (6) formschlüssig und/oder kraftschlüssig direkt oder über eine zwischengeordnete Verschleißeinrichtung wenigstens mittelbar miteinander verbunden sind,
**dadurch gekennzeichnet,**
**dass** der Walzenzapfen (5) abgestuft unter Ausbildung von Zapfenteilbereichen (14, 15) unterschiedlicher Abmessungen derart ausgebildet ist, dass sich dieser zu seinem freien Ende (11) hin verjüngt und dass die den Walzenzapfen (5) aufnehmende Öffnung (10) der Nabe (18) vom Aufnahmeelement (6) oder einer zwischen Aufnahmeelement (6) und dem Walzenzapfen (5) angeordneten Verschleißeinrichtung gebildet ist und zum Walzenzapfen (5) kommunizierend abgestuft ist.

2. Welle-Nabe-Verbindung nach Anspruch 1,
**dadurch gekennzeichnet,**
**dass** die Verschleißeinrichtung zumindest ein sich über wenigstens einen Zapfenteilbereich des Verbindungsbereiches erstreckendes und zwischen Walzenzapfen (5) und Aufnahmeelement (6) angeordnetes Verschleißelement (9) umfasst, welches flächig am Innenumfang der Öffnung (17) des Aufnahmeelementes (6) anliegend ausgeführt ist.

3. Welle-Nabe-Verbindung nach Anspruch 2,
**dadurch gekennzeichnet,**
**dass** das zumindest eine Verschleißelement (9) kraft- und/oder formschlüssig im Aufnahmeelement (6) fixiert ist.

4. Welle-Nabe-Verbindung nach einem der vorgeordneten Ansprüche,
**dadurch gekennzeichnet,**
**dass** eine Mehrzahl von Verschleißelementen (9) vorgesehen ist, die in Richtung der Rotationsachse betrachtet einander benachbart sich über den Verbindungsbereich erstreckend angeordnet sind.

5. Welle-Nabe-Verbindung nach einem der vorgenannten Ansprüche,
**dadurch gekennzeichnet,**
**dass** am Walzenzapfen (5) zumindest eine oder zwei Abstufungen unter Ausbildung von Zapfenteilbereichen (14, 15) vorgesehen sind.

6. Welle-Nabe-Verbindung nach einem der vorgenannten Ansprüche,
**dadurch gekennzeichnet,**
**dass** die einzelnen Zapfenteilbereiche (14, 15) hinsichtlich ihrer Erstreckung in Längsrichtung des Walzenzapfens (5) unterschiedlich ausgeführt sind.

7. Welle-Nabe-Verbindung nach Anspruch 6,
**dadurch gekennzeichnet,**
**dass** der einzelne Zapfenteilbereich (15), welcher sich vom freien Walzenzapfenende (11) erstreckend ausgeführt ist, eine größere Erstreckung in Längsrichtung des Walzenzapfens (5) aufweist, als die übrigen Zapfenteilbereiche (14).

8. Welle-Nabe-Verbindung nach Anspruch 6 oder 7,
**dadurch gekennzeichnet,**
**dass** zumindest zwischen dem in Richtung der Längsachse des Walzenzapfens (5) vom freien Walzenende (11) am entferntesten liegenden Zapfenteilbereich (14) und dem Verschleißelement (9) ein geringes Spiel vorgesehen ist.

9. Welle-Nabe-Verbindung nach einem der vorgenannten Ansprüche,
**dadurch gekennzeichnet,**
**dass** der Walzenzapfen (5) als Flachzapfen, umfassend zwei einander gegenüberliegend angeordnete Flachzapfenseiten (13, 14) ausgebildet ist.

10. Welle-Nabe-Verbindung nach einem der vorgenannten Ansprüche,
**dadurch gekennzeichnet,**
**dass** die Nabe (18) von einem Treffer für eine Antriebsanordnung einer Walze gebildet ist.

11. Antriebsanordnung für ein Walzwerk zum Antrieb zumindest einer Arbeitswalze (2), welche über eine Gelenkwelle (4) mit einer Antriebsmaschine gekoppelt ist, wobei zwischen Gelenkwelle (4) und Arbeitswalze (2) eine Verbindungseinrichtung in Form eines Treffers vorgesehen ist und die drehfeste Verbindung zwischen dem Treffer und der Arbeitswalze (2) als Welle-Nabe-Verbindung (1) gemäß einem der Ansprüche 1 bis 10 ausgeführt ist.

## Claims

1. Shaft-hub connection, in particular roll journal-wobbler connection for use in rolling mills, a shaft that can be rotated about an axis of rotation extending in the longitudinal direction being designed with a roll journal (5) arranged coaxially thereon, which can be at least partly inserted into an opening (10) in a hub (18) of the shaft-hub connection, the hub (18) comprising a receiving element (6) and the roll journal (5) and the receiving element (6) being connected at least indirectly to each other in a form-fitting and/or force-fitting manner, directly or via an interposed wearing device,
**characterized in that**
the roll journal (5) is formed so as to be stepped, forming journal subregions (14, 15) of different dimensions, in such a way that the roll journal (5) tapers towards its free end (11), and **in that** the opening (10) receiving the roll journal (5) in the hub (18) is formed by the receiving element (6) or a wearing device arranged between receiving element (6) and the roll journal (5), and is stepped so as to communicate with the roll journal (5).

2. Shaft-hub connection according to Claim 1,
**characterized in that**
the wearing device comprises at least one wearing element (9) extending over at least one journal subregion of the connecting region and arranged between roll journal (5) and receiving element (6), which is designed to rest flat on the inner circumference of the opening (17) of the receiving element (6).

3. Shaft-hub connection according to Claim 2,
**characterized in that**
the at least one wearing element (9) is fixed in the receiving element (6) in a force-fitting and/or form-fitting manner.

4. Shaft-hub connection according to one of the preceding claims,
**characterized in that**
a multiplicity of wearing elements (9) are provided, which, as viewed in the direction of the axis of rotation, are arranged adjacently to one another and extending over the connecting region.

5. Shaft-hub connection according to one of the preceding claims,
**characterized in that**
at least one or two steps are provided on the roll journal (5), forming journal subregions (14, 15).

6. Shaft-hub connection according to one of the preceding claims,
**characterized in that**
the individual journal subregions (14, 15) are designed differently with regard to their extent in the longitudinal direction of the roll journal (5) .

7. Shaft-hub connection according to Claim 6,
**characterized in that**
the individual journal subregion (15) which is designed to extend from the free roll journal end (11) has a greater extent in the longitudinal direction of the roll journal (5) than the other journal subregions (14).

8. Shaft-hub connection according to Claim 6 or 7,
**characterized in that**
slight play is provided at least between the journal subregion (14) which is located at the greatest distance from the free roll end (11) in the direction of the longitudinal axis of the roll journal (5) and the wearing element (9).

9. Shaft-hub connection according to one of the preceding claims,
**characterized in that**
the roll journal (5) is formed as a flat journal, comprising two flat journal sides (13, 14) arranged opposite each other.

10. Shaft-hub connection according to one of the preceding claims,
**characterized in that**
the hub (18) is formed by a wobbler for a drive arrangement of a roll.

11. Drive arrangement for a rolling mill for driving at least one working roll (2), which is coupled to a drive machine via an articulated shaft (4), wherein a connecting device in the form of a wobbler is provided between articulated shaft (4) and working roll (2), and the rotationally fixed connection between the wobbler and the working roll (2) is designed as a shaft-hub connection (1) according to one of Claims 1 to 10.

## Revendications

1. Liaison arbre-moyeu, en particulier liaison tourillon de cylindre-trèfle destinée à être utilisée dans des laminoirs, dans laquelle un arbre pouvant tourner autour d'un axe de rotation s'étendant en direction longitudinale est réalisé avec un tourillon de cylindre disposé coaxialement à celui-ci, qui peut être introduit au moins en partie dans une ouverture (10) sur un moyeu (18) de la liaison arbre-moyeu, dans laquelle le moyeu (18) comprend un élément de réception (6) et le tourillon de cylindre (5) et l'élément de réception (6) sont assemblés l'un à l'autre au moins indirectement par emboîtement et/ou par adhérence ou par l'intermédiaire d'un dispositif d'usure disposé entre eux,
**caractérisée en ce que** le tourillon de cylindre (5) est réalisé sous forme étagée avec formation de régions partielles de tourillon (14, 15) de dimensions différentes, de telle manière que celui-ci s'amincisse en direction de son extrémité libre (11) et que l'ouverture (10) du moyeu (18) recevant le tourillon de cylindre (5) soit formée par l'élément de réception (6) ou un dispositif d'usure disposé entre l'élément de réception (6) et le tourillon de cylindre (5) et soit étagée en conformité avec le tourillon de cylindre (5).

2. Liaison arbre-moyeu selon la revendication 1, **caractérisée en ce que** le dispositif d'usure comprend au moins un élément d'usure (9) s'étendant sur au moins une région partielle de tourillon de la région de liaison et disposé entre le tourillon de cylindre (5) et l'élément de réception (6), et qui est réalisé de façon à s'appliquer à plat sur la périphérie intérieure de l'ouverture (17) de l'élément de réception (6).

3. Liaison arbre-moyeu selon la revendication 2, **caractérisée en ce que** ledit au moins un élément d'usure (9) est fixé par adhérence et/ou par emboîtement dans l'élément de réception (6).

4. Liaison arbre-moyeu selon l'une quelconque des revendications précédentes, **caractérisée en ce qu'**il est prévu une multiplicité d'éléments d'usure (9), qui sont disposés l'un à proximité de l'autre en considérant la direction de l'axe de rotation et qui s'étendent sur la région de liaison.

5. Liaison arbre-moyeu selon l'une quelconque des revendications précédentes, **caractérisée en ce qu'**il est prévu sur le tourillon de cylindre (5) au moins un ou deux étage(s) pour former des régions partielles de tourillon (14, 15).

6. Liaison arbre-moyeu selon l'une quelconque des revendications précédentes, **caractérisée en ce que** les régions partielles de tourillon (14, 15) sont réalisées différemment en ce qui concerne leur extension dans la direction longitudinale du tourillon de cylindre (5).

7. Liaison arbre-moyeu selon la revendication 6, **caractérisée en ce que** la région partielle de tourillon individuelle (15), qui s'étend à partir de l'extrémité libre (11) du tourillon de cylindre, présente une plus grande extension dans la direction longitudinale du tourillon de cylindre (5) que les autres régions partielles de tourillon (14).

8. Liaison arbre-moyeu selon la revendication 6 ou 7, **caractérisée en ce qu'**il est prévu un faible jeu au moins entre la région partielle de tourillon (14) située le plus loin de l'extrémité libre de cylindre (11) dans la direction de l'axe longitudinal du tourillon de cylindre (5) et l'élément d'usure (9).

9. Liaison arbre-moyeu selon l'une quelconque des revendications précédentes, **caractérisée en ce que** le tourillon de cylindre (5) est réalisé sous forme de tourillon plat, comprenant deux côtés de tourillon plat (13, 14) disposés en opposition l'un à l'autre.

10. Liaison arbre-moyeu selon l'une quelconque des revendications précédentes, **caractérisée en ce que** le moyeu (18) est formé par un trèfle pour un dispositif d'entraînement d'un cylindre.

11. Dispositif d'entraînement pour un laminoir destiné à l'entraînement d'au moins un cylindre de travail (2), qui est couplé à une machine d'entraînement par un arbre de transmission (4), dans lequel il est prévu entre l'arbre de transmission (4) et le cylindre de travail (2) un dispositif de liaison en forme de trèfle et la liaison solidaire en rotation entre le trèfle et le cylindre de travail (2) est réalisée par une liaison arbre-moyeu selon l'une quelconque des revendications 1 à 10.
